# EUROPEAN PATENT APPLICATION

(11) **EP 4 148 183 A1**
(43) Date of publication of application: **15.03.2023**
(21) Application number: 22195260.9
(22) Date of filing: 13.09.2022
(51) Int. Cl.: E01C 3/00, E01C 5/06

(54) **CONCRETE PLAITED BLOCK BASE LAYER OF ASPHALT PAVEMENT**

(30) Priority: 13.09.2021 CN 202111077089
(71) Applicant: Changchun Municipal Engineering & Research Institute Co., Ltd., Changchun City, Jilin Province (CN)
(72) Inventor: Guo, Gao, Changchun City (CN); Zhang, Huiquan, Changchun City (CN); Li, Jianguo, Changchun City (CN); Du, Yantao, Changchun City (CN); Tian, Ye, Changchun City (CN); Zhan, Hongyu, Changchun City (CN); Zhang, Xu, Changchun City (CN)
(74) Representative: Cabinet Chaillot

(57) **Abstract**

The present disclosure discloses a concrete woven block base for an asphalt pavement. The concrete woven block base includes woven blocks, side surfaces of the woven blocks are inclined planes, and the plurality of woven blocks establish an interlocking relationship via the inclined planes to form a vertical interlocking and plane linkage plane structure of the woven block base. According to the present disclosure, prefabricated concrete blocks that meet specific conditions are defined as the woven blocks based on weaving technology, and due to a superimposition relationship of the woven blocks, joints between the blocks can be kept compressed and be in a tight fit state, which improves the load transfer capacity of the joints of the blocks, and a vertical interlocking and transverse linkage relationship can be established between the adjacent woven blocks; and a load effect of the road base is gradually diffused to all the woven blocks through a vertically and horizontally woven mesh structure, a circular loop superimposition relationship is formed around centers of mesh holes of the woven blocks, and the slab stability is improved, which is of practical significance for enhancing the slab stability of the base, preventing reflection cracks of a rigid-flexible composite pavement, prolonging the service life of the base, and reducing the cycle life cost.

## Description

### TECHNICAL FIELD

The present disclosure relates to the technical field of road engineering, in particular to a concrete woven block base for an asphalt pavement.

### BACKGROUND

Block paving is often used in the road field to improve the load transfer capacity of joints, so as to obtain the slab stability. Existing methods generally include the following: (1) Joints are filled with caulking sand, and an arching effect is obtained by densely extruding the caulking sand to diffuse loads. The structure is severely affected by microstructure discreteness and filling density of the caulking sand, wheel rolling, rain erosion, and road maintenance operations, resulting in low road quality reliability and poor slab stability, so that the structure is only used as a road surface, and serious reflection cracks may occur if an asphalt overlay is used. (2) Dowel rods are disposed at the joints of blocks to improve the load transfer capacity of the joints. The structure is long in construction period, not convenient to maintain and high in cost. (3) Steel strands are disposed at two ends of a cross section of a block pavement for tensioning, and pressure at the joints of the blocks is maintained via tension on the two sides, which ensures the linkage relationship of the blocks. The structure is complex in process, long in construction period and not convenient to maintain. (4) Since tongue and groove blocks and linkage blocks are provided with vertical planes among side surfaces, the load transfer capacity of joints is poor, the deflection difference of the blocks on two sides of the joints is large, and the slab stability is poor; and if an overlay is used, reflection cracks may occur.

In conclusion, it is urgent to develop a new type of blocks having high paving slab stability and meeting the stress requirements of a road base.

### SUMMARY

In this way, the present disclosure provides a concrete woven block base for an asphalt pavement. By defining blocks and assembling the blocks according to a circular superimposition relationship based on weaving conditions, a woven block structure with slab stability is obtained, and the obtained base blocks have vertical interlocking and plane linkage capacities, so that scattered woven blocks are connected into a steady base structure.

The technical solution provided by the present disclosure is specifically that a concrete woven block base for an asphalt pavement includes woven blocks, side surfaces of the woven blocks are inclined planes, the inclined planes include inward inclined planes and outward inclined planes, the inward inclined planes and the outward inclined planes are disposed alternately, and the plurality of woven blocks establish an interlocking relationship via the inclined planes to form a vertical interlocking and plane linkage plane structure of the woven block base.

Further, the woven blocks are equilateral polygonal bodies with interior angles being equal to or greater than 90 degrees.

Further, the number of the inward inclined planes is equal to the number of the outward inclined planes, and the total number of the inclined planes is equal to or greater than 4.

Further, the woven blocks are capable of being laid by individually adopting a plurality of equilateral polygonal bodies having the same number of sides, or by combining a plurality of equilateral polygonal bodies having two numbers of sides, mesh holes are provided at intersections of angles of a plurality of prefabricated concrete blocks in a formed paving surface, a sum of exterior angles surrounding each mesh hole is divisible by 360°, and the number of sides is even.

Further, the inward inclined planes are output inclined planes, the outward inclined planes are input inclined planes, and the plurality of prefabricated concrete blocks are assembled by superimposing the output inclined planes to the input inclined planes of the adjacent blocks.

Further, cast-in-place concrete edge seals (7) are disposed around the paving surface, and anchoring structures are disposed on a periphery of the paving surface.

Further, joints between the prefabricated concrete blocks are filled with mortar (3), and the prefabricated concrete blocks are wet-bonded via the mortar (3) to form the woven block base.

Further, the woven blocks are the prefabricated concrete blocks; and a sub-base (9) is disposed below the woven block base, and an asphalt concrete surface layer (8) is disposed on the woven block base.

Further, top angles of the prefabricated concrete blocks are chamfers, recesses are provided in top surfaces, and vertical hoisting fixture grooves and transverse grouting channels are provided in side surfaces.

The characteristics of a load transfer path of the concrete woven block base for the asphalt pavement provided by the present disclosure are:
1. The woven blocks transfer loads via the joints, a stress diffusion path of vertical point loads traverses each joint of a woven surface in sequence, and stress finally reaches all the blocks and covers the entire area of the assembled woven blocks, which has the characteristic of full coverage; and stress flow is not repeated or omitted, neither starting from two sides of the same joint, nor reaching the same joint from two sides, much less unloaded joints.
2. The stress presents a circular loop superimposition relationship with the mesh holes of the woven blocks as a center, and has the characteristic of surrounding the mesh holes.

According to the present disclosure, prefabricated concrete blocks that meet specific conditions are defined as the woven blocks based on weaving technology, and due to a superimposition relationship of the woven blocks, the joints between the blocks can be kept compressed and be in a tight fit state, which improves the load transfer capacity of the joints of the blocks, and a vertical interlocking and transverse linkage relationship can be established between the adjacent woven blocks. The road base has the plate stability through the vertically and horizontally woven mesh structure, which is of practical significance for enhancing the slab stability of the base, reducing and preventing reflection cracks of a rigid-flexible composite pavement, prolonging the service life of the base, and reducing the cycle life cost.

It should be understood that the above general descriptions and later detailed descriptions are merely examples and illustrations, and cannot limit the present disclosure.

### BRIEF DESCRIPTION OF DRAWINGS

The accompanying drawings, which are incorporated in and constitute a part of the specification, illustrate embodiments consistent with the present disclosure and, together with the specification, serve to explain the principles of the present disclosure.

In order to more clearly illustrate the embodiments of the present disclosure or the technical solutions in the prior art, accompanying drawings required in the embodiments or the prior art will be briefly introduced below. It is apparent that for those of ordinary skill in the art, other drawings can also be obtained according to these drawings without creative labor.
FIG. 1 is a three-dimensional view of bamboo strip cross-weaving according to an embodiment of the present disclosure.
FIG. 2 is a top view of bamboo strip cross-weaving according to an embodiment of the present disclosure.
FIG. 3 is a diagram of a superimposition relationship of bamboo strip cross-weaving according to an embodiment of the present disclosure.
FIG. 4 is three-dimensional views of woven blocks according to an embodiment of the present disclosure, where a denotes a quadrilateral body, b denotes a hexagonal body, and c denotes an octagonal body.
FIG. 5 is top views of woven blocks according to an embodiment of the present disclosure, where a denotes a quadrilateral body, b denotes a hexagonal body, and c denotes an octagonal body.
FIG. 6 is front views of woven blocks according to an embodiment of the present disclosure, where a denotes a quadrilateral body, b denotes a hexagonal body, and c denotes an octagonal body.
FIG. 7 is side views of woven blocks according to an embodiment of the present disclosure, where a denotes a quadrilateral body, b denotes a hexagonal body, and c denotes an octagonal body.
FIG. 8 is a plan view of an output and input relationship of quadrilateral woven blocks according to an embodiment of the present disclosure.
FIG. 9 is a plan view of an output and input relationship of hexagonal woven blocks according to an embodiment of the present disclosure.
FIG. 10 is a plan view of an output and input relationship of octagonal woven blocks and a quadrilateral woven block according to an embodiment of the present disclosure.
FIG. 11 is a three-dimensional view of an output and input relationship of quadrilateral woven blocks according to an embodiment of the present disclosure.
FIG. 12 is a three-dimensional view of an output and input relationship of hexagonal woven blocks according to an embodiment of the present disclosure.
FIG. 13 is a three-dimensional view of an output and input relationship of octagonal woven blocks and a quadrilateral woven block according to an embodiment of the present disclosure.
FIG. 14 is a diagram of assembly of quadrilateral woven blocks and horizontal load diffusion according to an embodiment of the present disclosure.
FIG. 15 is a diagram of assembly of hexagonal woven blocks and horizontal load diffusion according to an embodiment of the present disclosure.
FIG. 16 is a diagram of assembly of octagonal and quadrilateral combined woven blocks and horizontal load diffusion according to an embodiment of the present disclosure.
FIG. 17 is a diagram of assembly of quadrilateral woven blocks and vertical load diffusion according to an embodiment of the present disclosure.
Fig. 18 is a diagram of assembly of hexagonal woven blocks and vertical load diffusion according to an embodiment of the present disclosure.
FIG. 19 is a diagram of assembly of octagonal and quadrilateral combined woven blocks and vertical load diffusion according to an embodiment of the present disclosure.
FIG. 20 is a sub-structural diagram (auxiliary structure) of a woven block according to an embodiment of the present disclosure.
FIG. 21 is a diagram of a base paved with woven blocks according to an embodiment of the present disclosure.

### DETAILED DESCRIPTION OF EMBODIMENTS

Exemplary embodiments will be described in detail here, examples of which are illustrated in the accompanying drawings. When the following description refers to the accompanying drawings, unless otherwise indicated, the same numbers in different accompanying drawings indicate the same or similar elements. The implementations described in the following exemplary embodiments do not represent all implementations consistent with the present disclosure. Rather, they are merely examples of systems consistent with some aspects of the present disclosure as detailed in the appended claims.

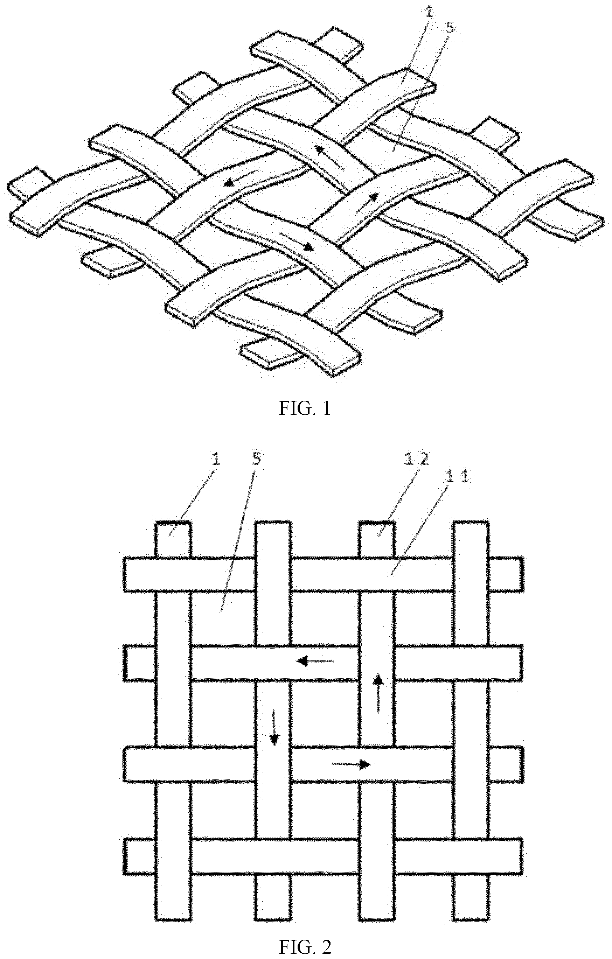

In order to solve the problems that the stress requirements of a road base do not meet the standard in the prior art, an embodiment provides a concrete woven block base for an asphalt pavement. The concrete woven block base includes a plurality of blocks, and the woven blocks in the base are based on weaving technology. Weaving has a long history. Not only can thin and flexible strips be used for weaving, but also hard wooden rods can be used for weaving arch bridge bridges. Various stability conditions are defined to keep contact surfaces of woven objects under pressure, so as to obtain sufficient friction. Input and output of a cross-woven structure are integrated. In the embodiment, the blocks are manufactured based on a warp and weft weaving method of bamboo strips, and contact surfaces of the adjacent blocks are superimposed to one another, so that all joints of the blocks have the load transfer capacity, and the slab stability of the road base is improved. As shown in FIG. 1 to FIG. 3, the concrete blocks for the asphalt pavement in the embodiment are based on a process of a cross-woven mesh made of bamboo strips 1. Transverse bamboo strips 11 and longitudinal bamboo strips 12 are cross-woven into an integral mesh structure. Mesh holes 5 are formed by superimposing the transverse bamboo strips 11 and the longitudinal bamboo strips 12. As shown by arrows in the figures, the bamboo strips 1 surrounding the mesh holes 5 form a closed superimposition output and input relationship. The transverse bamboo strips 11 and the longitudinal bamboo strips 12 form a separate pressure relationship when subjected to a vertical force, so as to offset vertical loads.

Side surfaces of the woven blocks are inclined planes, and the inclined planes include inward inclined planes and outward inclined planes. The inward inclined planes and the outward inclined planes are disposed alternately. The plurality of woven blocks establish an interlocking relationship via the inclined planes to form a vertical interlocking and plane linkage plane structure of the woven block base. When the blocks are used for forming the road base, vehicle loads are diffused only via the input inclined planes and the output inclined planes on the side surfaces of the blocks without using other connecting parts, and the interlocking relationship is established between the blocks via the inclined planes. All side surfaces of the blocks are load transfer surfaces, so that a plane formed by assembling the blocks has the vertical interlocking and plane linkage structure, and slab stability similar to the cross-woven mesh made of the bamboo strips is obtained. In the embodiment, the above structure is defined as a woven block structure, and woven block is a general term for a series of blocks that meet the conditions of the woven structure.

The woven blocks meeting the conditions of the woven structure are equilateral polygonal bodies with interior angles being equal to or greater than 90 degrees.

The side surfaces of the woven blocks are all inclined planes. The outward inclined planes are visible side inclined planes in the top view, and the inward inclined planes are invisible side inclined planes in the top view. The inward inclined planes and the outward inclined planes have the same number, and are distributed alternately. The total number of the inclined planes is equal to or greater than 4.

The woven blocks are capable of being laid by individually adopting a plurality of equilateral polygonal bodies having the same number of sides, or by combining a plurality of equilateral polygonal bodies having two numbers of sides. Mesh holes are provided at intersections of angles of a plurality of prefabricated concrete blocks in a formed paving surface. A sum of exterior angles surrounding each mesh hole is divisible by 360°. The number of sides is even.

The inward inclined planes are output inclined planes, the outward inclined planes are input inclined planes, and the side surfaces of the woven blocks are bonded via the inclined planes, that is, the plurality of prefabricated concrete blocks are assembled by superimposing the output inclined planes to the input inclined planes of the adjacent blocks. That is, the side surfaces of the woven blocks are all inclined planes, and the whole base structure constitutes a paving structure with inputs and outputs integrated, intersecting with each other, and circularly superimposed As a result, full stress coverage and surrounding the mesh holes of vertical loads on the assembled plane are achieved by the paving structure, and the block paving surface has the slab stability.

The base is formed by paving the plane with the blocks of the above structure, filling joints with mortar for wet-bonding, and anchoring the periphery. The joints of the block assembled structure are filled with high-fluidity binders to achieve wet-bonding. Preferably, the blocks may be prefabricated concrete blocks, process grooves for hoisting, positioning ribs and transverse grooves may be provided in the side surfaces of the blocks, and mesh recesses may be provided in the top surfaces.

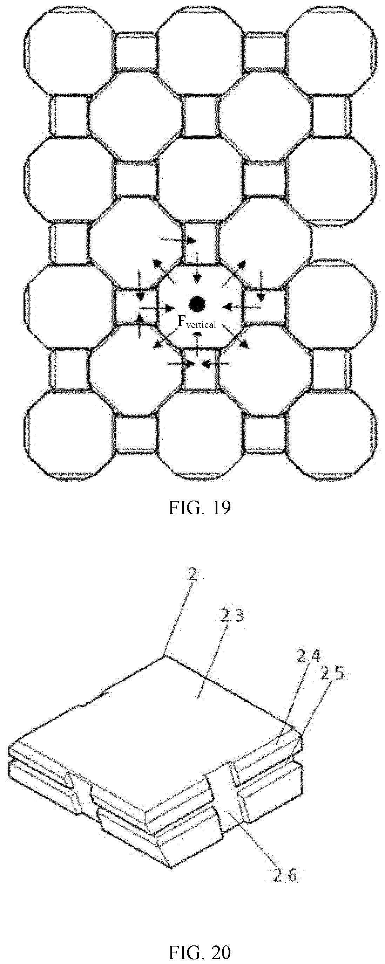

Taking a quadrilateral block 4 as an example, as shown in FIG. 20, in order to ensure factory prefabrication in engineering applications, chamfers 24 may be provided, recesses may be provided in a top surface 23 to increase the friction between the block and an asphalt surface layer, and vertical hoisting fixture grooves 26, transverse grouting channels 25 and the like may be provided in side surfaces.

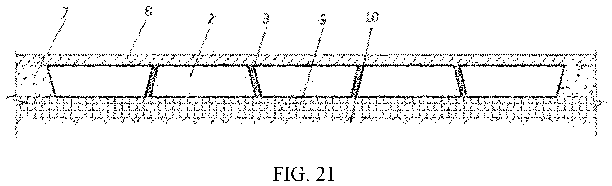

As shown in FIG. 21, after the woven blocks 2 are laid in engineering, cast-in-place concrete edge seals 7 are disposed around the paving surface, and the joints of the woven blocks are filled with the mortar 3 for wet-bonding, and thus the whole base is formed. In actual engineering, the smoothness and compactness of a soil foundation 10 need to be ensured, so that a sub-base 9 may be set below the woven block base for different traffic loads. An asphalt concrete surface layer 8 is disposed on the base after the concrete woven block base of the asphalt pavement is completed. Thus, a whole road structure which is good in load transfer capacity, capable of preventing reflection cracks, long in service life, desirable in quality and environmentally friendly is constituted.

Circular superimposition is a structural condition for the slab stability, and multi-path load transfer for full coverage and surrounding the mesh holes are stress characteristics. Specifically, the woven blocks transfer loads via the joints, a stress diffusion path of vertical point loads traverses each joint of a woven surface, and stress finally reaches all the blocks and covers the entire area of the assembled woven blocks, which has the characteristic of full coverage; and stress flow is not repeated or omitted, neither starting from two sides of the same joint, nor reaching the same joint from two sides, much less unloaded joints.

The stress presents a circular loop superimposition relationship with the mesh holes of the woven blocks as a center, and has the characteristic of surrounding the mesh holes.

Due to full coverage of load stress diffusion of the blocks, point loads of the paving surface reaches edges of the pavement surface in a radial multi-path transfer manner to cover the entire area, all the woven blocks are involved, and the entire area is stressed. The stress surrounding the mesh holes specifically means that stress diffusion presents a circular loop superimposition relationship. Because of the surrounding stress flow, a transfer path bifurcates and changes the direction, and can traverse transverse joints of the blocks, so that the adjacent woven blocks can be used in collaboration to coordinate strain and reduce the deflection difference. Due to a superimposition relationship of the woven blocks, the joints can be kept compressed and be in a tight fit state, which improves the load transfer capacity of the joints, and a vertical interlocking and transverse linkage relationship can be established between the adjacent woven blocks. The base has the slab stability through the vertically and horizontally woven mesh structure, which is of practical significance for enhancing the slab stability of the base, reducing and preventing reflection cracks of a rigid-flexible composite pavement, prolonging the service life of the base, and reducing the cycle life cost.

The present disclosure will be further illustrated below in conjunction with preferred embodiments to help understand the content of the present disclosure.

### Embodiment 1

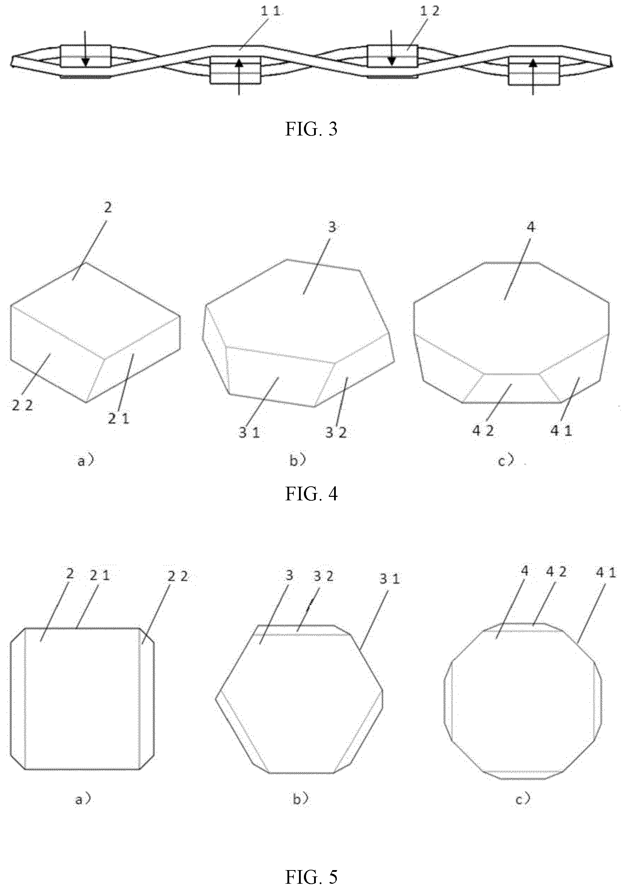

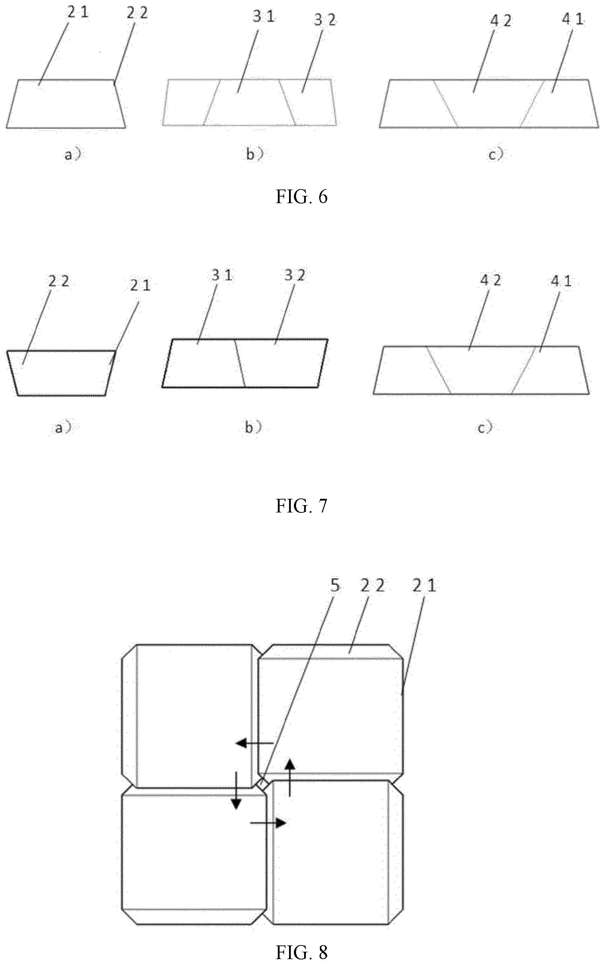

Quadrilateral woven blocks are adopted, as shown in a) in FIG. 4 to FIG. 7. A top surface and a bottom surface of each quadrilateral woven block 2 are rectangular. Among four side surfaces in the top view, two symmetrical side surfaces are visible input inclined planes 22, the other two symmetrical side surfaces are invisible output inclined planes 21, and the output inclined planes and the input inclined planes are distributed alternately. Interior angles of the woven blocks are 90 degrees. As shown in FIG. 8, a mesh hole 5 is provided after quadrilateral blocks 2 are assembled, and a closed circular output and input relationship is formed around the mesh hole. The base structure is formed by assembling polygonal bodies having the same number of sides, that is, the single quadrilateral blocks 2, in a manner of superimposing the output inclined planes to the input inclined planes of the adjacent blocks.

### Embodiment 2

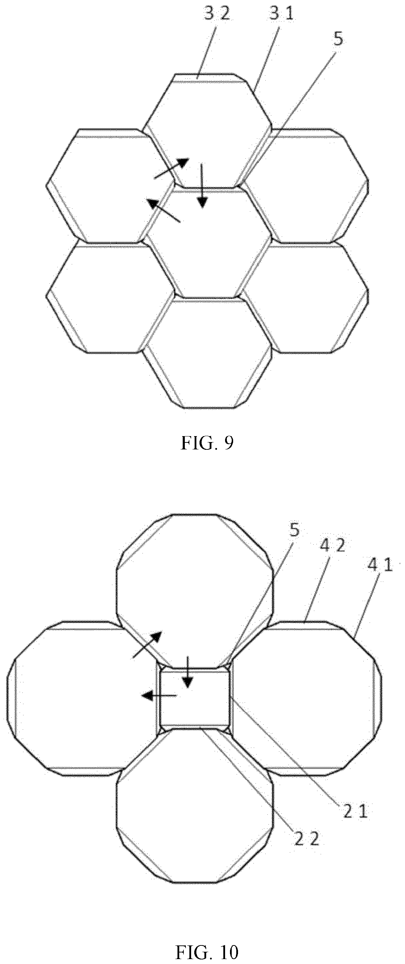

Hexagonal woven blocks are adopted, as shown in b) in FIG. 4 to FIG. 7. A top surface and a bottom surface of each hexagonal woven block 3 are hexagonal, and interior angles of the woven block are 120 degrees. Among six side surfaces in the top view, three symmetrical side surfaces are visible input inclined planes 32, the other three symmetrical side surfaces are invisible output inclined planes 31, and the output inclined planes and the input inclined planes are distributed alternately. As shown in FIG. 9, mesh holes 5 are provided after the hexagonal blocks 3 are assembled, and a closed circular output and input relationship is formed around the mesh holes 5. The single hexagonal blocks 3 are assembled by superimposing the output inclined planes to the input inclined planes of the adjacent blocks.

### Embodiment 3

Octagonal woven blocks 4, as shown in c) in FIG. 4 to FIG. 7, and quadrilateral woven blocks 2 are adopted. A top surface and a bottom surface of each octagonal woven block 4 are octagonal, and interior angles of the woven block are 135 degrees. Among eight side surfaces in the top view, four symmetrical side surfaces are visible input inclined planes 42, the other four symmetrical side surfaces are invisible output inclined planes 41, and the output inclined planes and the input inclined planes are distributed alternately. As shown in FIG. 10, mesh holes 5 are provided after the octagonal blocks 4 and the quadrilateral blocks 2 are assembled, and a closed circular output and input relationship is formed around the mesh holes. The octagonal blocks 4 and the quadrilateral blocks 2 need to be assembled and used in combination by superimposing the output inclined planes to the input inclined planes.

### Embodiment 4

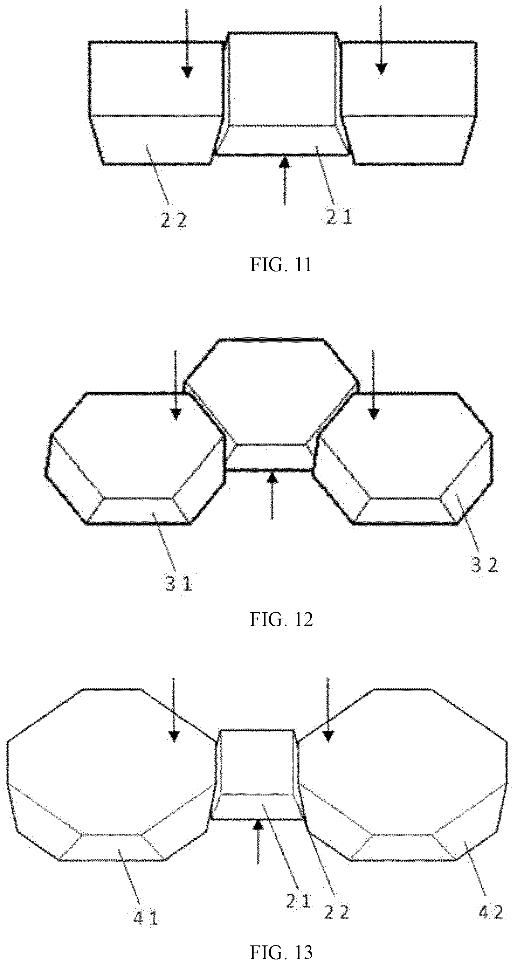

As shown in FIG. 11 to FIG.13, when the quadrilateral blocks 2, the hexagonal blocks 3, and the octagonal blocks 4 are assembled by adopting the above splicing processes and subjected to vertical loads, a separate pressure relationship is formed.

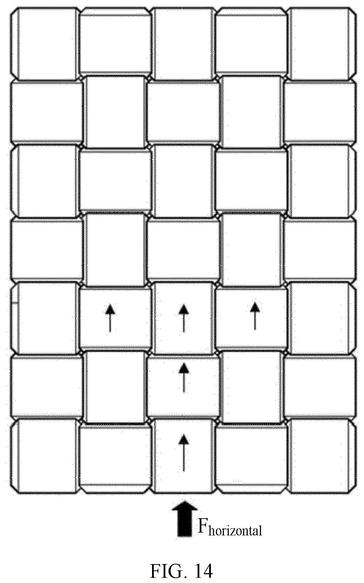

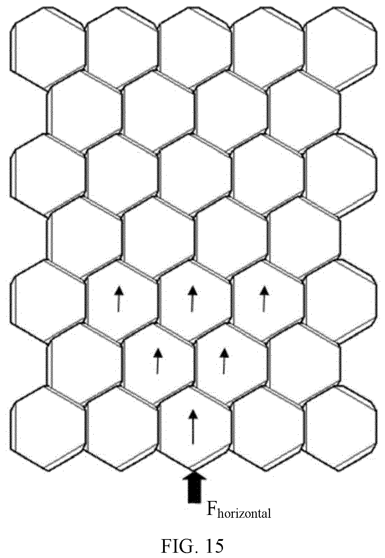

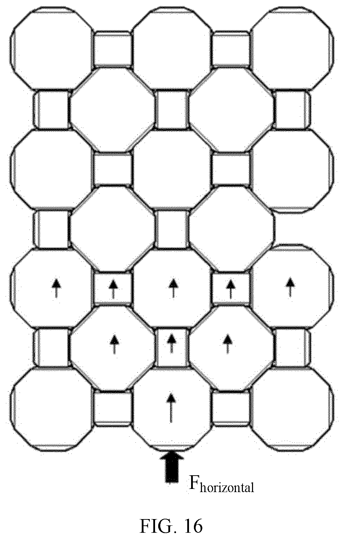

As shown in FIG. 14 to 16, when the quadrilateral blocks 2, the hexagonal blocks 3, and the octagonal blocks 4 are assembled and subjected to horizontal loads, forces are dispersed to each woven block so as to disperse stress.

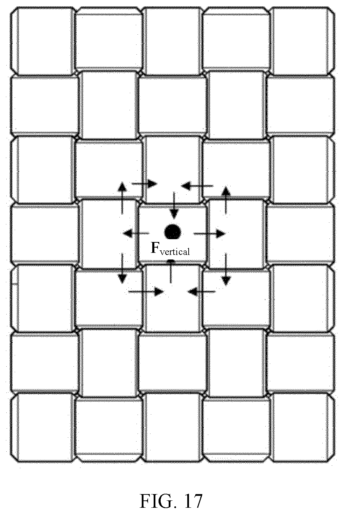

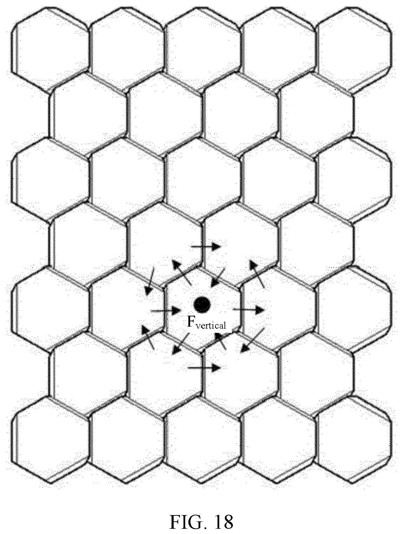

As shown in FIG. 17 to FIG. 19, when the quadrilateral blocks 2, the hexagonal blocks 3, and the octagonal blocks 4 are assembled and subjected to vertical loads, closed circular component forces are formed at the mesh holes 5 to eliminate vertical stress.

In the description of the present disclosure, it should be understood that the terms "upper", "lower", "top", "bottom", "interior", "exterior", and the like indicate orientations or positional relationships based on the orientations or positional relationships shown in the accompanying drawings, are merely for convenience in describing the present disclosure and simplifying the description, and are not intended to indicate or imply that the indicated direction must be a particular orientation or be constructed in a particular orientation, and thus they should not be construed as limiting the present disclosure.

Other embodiments of the present disclosure will be apparent to those skilled in the art from consideration of the specification and practice of the disclosure herein. The present application is intended to cover any variations, uses, or adaptations of the present disclosure following the general principles thereof and including such departures from the present disclosure as come within known or customary practice in the art. It is intended that the specification and embodiments be considered as exemplary only, with a true scope and spirit of the present disclosure being indicated by the claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A concrete woven block base for an asphalt pavement, comprising woven blocks, side surfaces of the woven blocks being inclined planes, the inclined planes comprising inward inclined planes and outward inclined planes, the inward inclined planes and the outward inclined planes being disposed alternately, and the plurality of woven blocks establishing an interlocking relationship via the inclined planes to form a vertical interlocking and plane linkage plane structure of the woven block base.

2. The concrete woven block base for an asphalt pavement according to claim 1, wherein the woven blocks are equilateral polygonal bodies with interior angles being equal to or greater than 90 degrees.

3. The concrete woven block base for an asphalt pavement according to claim 1, wherein the number of the inward inclined planes is equal to the number of the outward inclined planes, and the total number of the inclined planes is equal to or greater than 4.

4. The concrete woven block base for an asphalt pavement according to claim 2, wherein the woven blocks are capable of being laid by individually adopting a plurality of equilateral polygonal bodies having the same number of sides, or by combining a plurality of equilateral polygonal bodies having two numbers of sides, mesh holes are provided at intersections of angles of a plurality of prefabricated concrete blocks in a formed paving surface, a sum of exterior angles surrounding each mesh hole is divisible by 360°, and the number of sides is even.

5. The concrete woven block base for an asphalt pavement according to claim 4, wherein the inward inclined planes are output inclined planes, the outward inclined planes are input inclined planes, and the plurality of prefabricated concrete blocks are assembled by superimposing the output inclined planes to the input inclined planes of the adjacent blocks.

6. The concrete woven block base for an asphalt pavement according to claim 4, wherein cast-in-place concrete edge seals (7) are disposed around the paving surface, and anchoring structures are disposed on a periphery of the paving surface.

7. The concrete woven block base for an asphalt pavement according to claim 4, wherein joints between the prefabricated concrete blocks are filled with mortar (3), and the prefabricated concrete blocks are wet-bonded via the mortar (3) to form the woven block base.

8. The concrete woven block base for an asphalt pavement according to claim 4, wherein the woven blocks are the prefabricated concrete blocks; and a sub-base (9) is disposed below the woven block base, and an asphalt concrete surface layer (8) is disposed on the woven block base.

9. The concrete woven block base for an asphalt pavement according to claim 4, wherein top angles of the prefabricated concrete blocks are chamfers, recesses are provided in top surfaces, and vertical hoisting fixture grooves and transverse grouting channels are provided in side surfaces.
